(19) Europäisches Patentamt
European Patent Office
Office européen des brevets

(11) **EP 3 904 074 A1**

(12) **EUROPEAN PATENT APPLICATION**
published in accordance with Art. 153(4) EPC

(43) Date of publication:
**03.11.2021 Bulletin 2021/44**

(21) Application number: **19905148.3**

(22) Date of filing: **23.12.2019**

(51) Int Cl.:
**B32B 15/08** (2006.01)　　　**B29C 70/68** (2006.01)
**B32B 15/088** (2006.01)　　　**C08J 5/04** (2006.01)
**B29K 105/22** (2006.01)

(86) International application number:
**PCT/JP2019/050298**

(87) International publication number:
**WO 2020/137946 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2018 JP 2018244681**

(71) Applicant: **NIPPON STEEL Chemical & Material
Co., Ltd.
Tokyo 103-0027 (JP)**

(72) Inventors:
• **YOSHIOKA, Takahiro
Tokyo 103-0027 (JP)**
• **TAKAHASHI, Hiroyuki
Tokyo 103-0027 (JP)**
• **ANDOH, Hideki
Tokyo 103-0027 (JP)**

(74) Representative: **Vossius & Partner
Patentanwälte Rechtsanwälte mbB
Siebertstraße 3
81675 München (DE)**

(54) **METAL-FIBER REINFORCED PLASTIC COMPOSITE MATERIAL**

(57) To provide a metal-fiber reinforced plastic composite material which exhibits favorable impregnation of a matrix resin into a reinforcing fiber substrate and favorable adhesion to metal members, and which has excellent heat resistance, impact resistance and mechanical properties. The metal-fiber reinforced plastic composite material is a laminate of a metal member and a fiber reinforced plastic, wherein the fiber reinforced plastic includes a reinforcing fiber substrate (A) and a thermoplastic resin composition (B), the thermoplastic resin composition (B) contains a phenoxy resin (B-1) and a polyamide resin (B-2) at a mass ratio (B-1)/(B-2) of 80/20 to 20/80, an adhesive strength of the thermoplastic resin composition (B) to a monofilament of the reinforcing fiber substrate (A) is 40 MPa or more as an interfacial shear strength at 23°C in a microdroplet method, and an adhesive strength between the metal member and the thermoplastic resin composition (B) is 7.0 MPa or more as a tensile shear strength at 23°C.

EP 3 904 074 A1

**Description**

[Technical Field]

The present invention relates to a metal-fiber reinforced composite material in which a metal member and a fiber-reinforced plastic molding material are laminated and integrated, and a method for producing same.

[Background Art]

Fiber reinforced plastic (FRP) materials are widely used as highly strong lightweight materials in fishing rods, tennis rackets, sports bicycles, motor vehicles, wind turbine blades and aircraft. In the automotive industry in particular, due to the use of fiber reinforced plastic materials, active research has progressed in order to reduce the weight of vehicle bodies and improve fuel economy and running performance.

However, FRPs are lightweight and highly strong, but have problems such as being more expensive than conventional metal-based materials, only being possible to produce members whose shape has been determined in advance, and the time required to produce members being long because epoxy resins, which are thermosetting resins, are used as matrix resins.

As a result, attempts have been made to solve these problems by combining metal materials having high productivity with FRP materials, in which thermoplastic resins are used as matrix resins, in order to enable press working. FRP materials obtained using thermoplastic resins such as polyamides exhibit higher productivity than thermosetting resins, and exhibit excellent recycling properties after use, hence, applications of such materials has been actively investigated in recent years.

For example, as a motor vehicle component, PTL 1 discloses a metal-CFRP composite material obtained by laminating and integrating a metal and a carbon fiber reinforced plastic material obtained using a thermoplastic resin as a matrix resin.

In addition, PTL 2 discloses a metal-CFRP composite material obtained by strongly integrating an aluminum alloy and a CFRP in which a polyamide resin is used.

However PTL 1 discloses polypropylene, polyethylene, polyamides and/or mixtures of these as examples of matrix resins of thermoplastic resins, but does not mention use of a phenoxy resin as a matrix resin.

In addition, PTL 2 is characterized by subjecting a metal surface to fine processing so as to have specific parameters using a method such as micro-etching, and strongly integrating a metal and a FRP by embedding the metal surface in a resin, and merely discloses a highly crystalline polyamide or poly (phenylene sulfide)-based resin composition in order to achieve this.

In addition, resin compositions in which epoxy compounds and polyamide resins are blended are disclosed in PTL 3 and PTL 4. However, PTL 3 merely discloses a carbon fiber reinforced polyamide resin composition obtained by blending 0.1 to 10 parts by weight of an epoxy compound having a molecular weight of 10,000 or less, and does not envisage an injection molding material to be composited with a metal. However, PTL 4 discloses a polyamide resin composition of a nylon 6 resin and a phenoxy resin, but merely considers a vibration damping material that is mechanically attached to a motor vehicle component or the like, and takes no account of adhesive strength to a metal. In addition, the invention is designed so that a molded product of a simple resin material is mechanically attached to the periphery of an engine or the like, and does not therefore consider a metal-FRP composite material as a structural material.

[Citation List]

[Patent Literature]

[PTL 1] Japanese Translation of PCT Application No. 2014-509971
[PTL 2] Japanese Patent Application Publication No. 2016-60051
[PTL 3] Japanese Patent Application Publication No. 2015-129271
[PTL 4] Japanese Patent Application Publication No. H04-11654

[Non Patent Literature]

[NPL 1] Reinforced Plastics, vol. 59 (2013), page 330

[Summary of Invention]

An object of the present invention is to provide a metal-fiber reinforced plastic composite material which exhibits favorable impregnation of a matrix resin into a reinforcing fiber substrate and favorable adhesion to metal members, and which has excellent heat resistance, impact resistance and mechanical properties.

(1) A metal-fiber reinforced plastic composite material which is a laminate of a metal member and a fiber reinforced plastic, wherein the fiber reinforced plastic comprises a reinforcing fiber substrate (A) and a thermoplastic resin composition (B), the thermoplastic resin composition (B) contains a phenoxy resin (B-1) and a polyamide resin (B-2) at a mass ratio (B-1)/(B-2) of 80/20 to 20/80, an adhesive strength of the thermoplastic resin composition (B) to a monofilament of the reinforcing fiber substrate (A) is 40 MPa or more as an interfacial shear strength ($\tau$) at 23°C in a microdroplet method, and an adhesive strength between the metal member and the thermoplastic resin composition (B) is 7.0 MPa or more as a tensile shear strength at 23°C.
(2) The metal-fiber reinforced plastic composite material mentioned above, wherein an absolute value of a thickness change rate is less than 2.0% after applying a thermal history of 30 minutes at 180°C.
(3) The metal-fiber reinforced plastic composite material mentioned above, wherein the polyamide resin (B-2) is a wholly aliphatic polyamide and/or a semi-aliphatic polyamide.
(4) The metal-fiber reinforced plastic composite material mentioned above, wherein the material of the metal member is an iron/steel material or aluminum.
(5) The metal-fiber reinforced plastic composite material mentioned above, wherein the reinforcing fiber substrate includes one or two or more types of fiber selected from the group consisting of carbon fibers, boron fibers, silicon carbide fibers, glass fibers and aramid fibers.

According to the present invention, it is possible to obtain a lightweight metal-fiber reinforced plastic composite material in which a fiber-reinforced plastic material and a metal member are strongly bonded to each other, and which exhibits particularly excellent mechanical characteristics, and moreover which exhibits low moisture absorption and high heat resistance.

[Description of Embodiments]

The present invention will now be explained in detail.
The metal-fiber reinforced plastic composite material of the present invention (also referred to as a metal-FRP composite material) is a composite material obtained by laminating and integrating a metal member and a fiber reinforced plastic (FRP) material obtained by impregnating a reinforcing fiber substrate (A) with a thermoplastic resin composition (B) as a matrix resin.
In the metal-FRP composite material of the present invention, the matrix resin of the FRP material to be laminated and integrated with the metal member is a thermoplastic resin composition (B) that contains phenoxy resin (B-1) and a polyamide resin (B-2), which are thermoplastic resins, as essential components. Because the phenoxy resin (B-1) is used in the matrix resin, the FRP material of the present invention can be pressure molded by hot pressing, and productivity can therefore be greatly improved. In addition, because the polyamide resin (B-2), which is an engineering plastic, is used in the matrix resin, good mechanical properties are achieved, such as high heat resistance and excellent toughness.
The reinforcing fiber substrate (A) of the FRP material used in the metal-FRP composite material of the present invention can be selected from among a wide range of substances, such as carbon fibers, glass fibers, ceramic fibers such as boron, alumina and silicon carbide fibers, metal fibers such as stainless steel fibers, and organic fibers such as aramid fibers. Of these, use of carbon fibers and glass fibers is preferred, and use of highly strong carbon fibers that exhibit good thermal conductivity is most preferred. Carbon fibers can be pitch-based carbon fibers or PAN-based carbon fibers, but pitch-based carbon fibers exhibit both high strength and high thermal conductivity, and can therefore rapidly dissipate generated heat, and are therefore more preferred than PAN-based carbon fibers in applications in which it is necessary to dissipate heat. The form of the reinforcing fiber substrate is not particularly limited, and it is possible to use, for example, unidirectional materials, cloths such as plain fabrics and twill fabrics, three-dimensional cloths, chopped strand mats, tows including several thousand or more filaments, non-woven fabrics, and the like. It is possible to use one of these reinforcing fiber substrates, or a combination of two or more types thereof.
It is preferable to cause a sizing agent, a coupling agent, or the like, to adhere to the surfaces of the reinforcing fibers in order to improve wettability of the matrix resin to the reinforcing fibers and improve handleability. Examples of sizing agents include maleic anhydride-based compounds, urethane-based compounds, acrylic-based compounds, epoxy-based compounds, phenol-based compounds and derivatives of these compounds. Examples of coupling agents include amino-based, epoxy-based, chlorine-based, mercapto-based and cation-based silane coupling agents.
The content of the sizing agent and coupling agent is 0.1 to 10 parts by weight, and more preferably 0.5 to 6 parts by weight, relative to 100 parts by weight of reinforcing fibers. If the content of the sizing agent and the coupling agent is 0.1 to 10 wt%, wettability of the matrix resin composition and handleability are superior. This content is more preferably 0.5 to 6 wt%.

A monofilament of the reinforcing fiber substrate (A) preferably exhibits good adhesive properties to the thermoplastic resin composition (B) that is the matrix resin composition of the FRP material. Adhesive properties can be evaluated by measuring the interfacial shear strength ($\tau$) of a monofilament and the thermoplastic resin composition (B) using a microdroplet method (MD method) (see NPL 1). If the interfacial shear strength, as measured at 23°C using this method, is 40 MPa or more, adhesive properties between the monofilament and the matrix resin composition are good and a fiber reinforced plastic having excellent strength can be obtained. Meanwhile, if this interfacial shear strength is less than 40 MPa, peeling occurs at an interface between the monofilament and the matrix resin composition in cases where the fiber reinforced plastic is subjected to a load, meaning that the performance of the reinforcing fibers is not sufficiently exhibited and a fiber reinforced plastic having poor strength is formed. In addition, because affinity between the resin and the filament per se is poor, it may be difficult to mold the FRP material, and if the interfacial shear strength between the reinforcing fibers and the thermoplastic resin composition (B) that is the matrix resin is insufficient, satisfactory mechanical properties as a FRP material cannot be achieved and the performance required of the metal-FRP composite material cannot be achieved.

Moreover, the interfacial shear strength with the reinforcing fibers is preferably 42 MPa or more, and more preferably 45 MPa or more.

The phenoxy resin (B-1), which is an essential component of the matrix resin, is a thermoplastic resin obtained from a condensation reaction between a dihydric phenol compound and an epihalohydrin or from a polyaddition reaction between a dihydric phenol compound and a difunctional epoxy resin, and can be obtained using a well-known conventional method either in a solution or in the absence of a solvent. The mass average molecular weight (Mw) of the phenoxy resin is generally 10,000 to 200,000, but is preferably 20,000 to 100,000, and more preferably 30,000 to 80,000. The strength of a molded body is poor if the Mw value is too low, and workability and processability tend to deteriorate if the Mw value is too high. Moreover, the Mw value is a value obtained by carrying out measurements using gel permeation chromatography (GPC) and calculating using a standard polystyrene calibration curve.

The hydroxyl group equivalent amount (g/eq) of the phenoxy resin is generally 50 to 1,000, but is preferably 50 to 750, and particularly preferably 50 to 500. If the hydroxyl group equivalent amount is too low, the amount of hydroxyl groups increases, the water absorption rate increases, and this can lead to concerns that mechanical characteristics will deteriorate. If the hydroxyl group equivalent amount is too high, the amount of hydroxyl groups is low, meaning that wettability of the reinforcing fiber substrate, and especially carbon fibers, decreases.

A suitable glass transition temperature (Tg) for the phenoxy resin is 65°C to 160°C, but is preferably 70°C to 150°C. If the glass transition temperature is lower than 65°C, moldability is good, but problems occur, such as a deterioration in storage stability of a powder or pellets due to blocking, and stickiness (poor tackiness) when pre-forming. If the glass transition temperature exceeds 160°C, melt viscosity increases and moldability and fillability into fibers deteriorates, meaning that press molding needs to be carried out at a higher temperature. Moreover, the glass transition temperature of the phenoxy resin is a value determined from the peak value of a second scan when measurements are carried out within a temperature range of 20°C to 280°C at a temperature increase rate of 10°C/min using a differential scanning calorimeter.

The phenoxy resin is not particularly limited as long as the physical properties mentioned above are satisfied, but examples thereof include bisphenol A type phenoxy resins (for example, Phenotote YP-50, YP-50S and YP-55U produced by Nippon Steel Chemical & Material Co., Ltd.), bisphenol F type phenoxy resins (for example, Phenotote FX-316 produced by Nippon Steel Chemical & Material Co., Ltd.), bisphenol A-bisphenol F copolymer type phenoxy resins (for example, YP-70 produced by Nippon Steel Chemical & Material Co., Ltd.) and special phenoxy resins (for example, Phenotote YPB-43C and FX293 produced by Nippon Steel Chemical & Material Co., Ltd.), and it is possible to use one of these in isolation or a combination of two or more types thereof.

In addition, it is possible to use a thermoplastic resin known as a thermoplastic epoxy resin, which is similar to a phenoxy resin, instead of a phenoxy resin, but use of a phenoxy resin is preferred.

It is preferable for the phenoxy resin to be a solid at normal temperature and to have a melt viscosity of 10 to 3,000 Pa·s within a temperature range of 180°C to 350°C.

Moreover, if the melt viscosity exceeds 3,000 Pa·s, impregnation of the resin into the reinforcing fiber substrate is insufficient when carrying out lamination and compositing with a metal member, and if the melt viscosity is less than 10 Pa·s, the resin becomes excessively fluid, it becomes difficult to control the content by volume of fibers in a FRP molded body, chipping occurs as a result of insufficient resin at the time of molding, and thickness precision deteriorates. As a result, the mechanical strength of the FRP molded body decreases, and this leads to concerns that mechanical characteristics of a composite material formed with a metal member will also deteriorate.

In addition, it is preferable for the weight loss upon heating to be less than 1% when heated to a temperature of 350°C in thermogravimetric (TG) measurements. If the weight loss upon heating exceeds 1% or more, the phenoxy resin undergoes thermal degradation during molding, and this leads to concerns regarding discoloration of a molded body and a decrease in mechanical strength.

The polyamide resin (B-2) is blended together with the phenoxy resin (B-1) in the matrix resin of the FRP material used in the metal-FRP composite material of the present invention. By blending the polyamide resin, it is possible to improve the heat resistance, impact resistance and mechanical characteristics of the matrix resin. The phenoxy resin (B-1) and the polyamide resin (B-2) are not compatible with each other, but because both resins exhibit good compatibility due to being polar resins, a structure formed at the time of heat molding is strong, and it is therefore surmised that a resin composition is formed in which the strength of the phenoxy resin (B-1) and the elongation and heat resistance of the polyamide resin (B-2) are reflected and not impaired. In addition, an improvement in such performance enables expansion to other applications requiring higher heat resistance, such as motor vehicle materials and aerospace materials.

The polyamide resin (B-2) is a thermoplastic resin in which the main chain is constituted from repeating units of amide bonds, and is obtained by means of ring opening polymerization of a lactam, co-condensation polymerization of lactams, dehydrating condensation between a diamine and a dicarboxylic acid, or the like.

Examples of lactams include $\varepsilon$-caprolactam, undecane lactam and lauryl lactam, and the diamine is an aliphatic diamine such as hexamethylenediamine, nonanediamine or methylpentadiamine; an alicyclic diamine such as cyclohexanediamine, methylcyclohexanediamine, isophorodiamine, norbornane dimethylamine or tricyclodecane dimethyldiamine; or an aromatic diamine such as p-phenylenediamine, m-phenylenediamine, p-xylylenediamine, m-xylylenediamine, 4,4'-diaminodiphenyl, 4,4'-diaminodiphenylsulfone or 4,4'-diaminodiphenyl ether. In addition, the dicarboxylic acid is an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid; an alicyclic dicarboxylic acid such as 1,3-cyclopentane dicarboxylic acid or 1,4-cyclohexane dicarboxylic acid; or an aromatic dicarboxylic acid such as terephthalic acid, isophthalic acid, 2,6-naphthalene dicarboxylic acid, 2,7-naphthalene dicarboxylic acid, 1,4-naphthalene dicarboxylic acid, 1,4-phenylenedioxydiacetic acid, 1,3-phenylenedioxydiacetic acid, diphenic acid, 4,4'-oxydibenzoic acid, diphenylmethane-4,4'-dicarboxylic acid, diphenylsulfone-4,4'-dicarboxylic acid or 4,4'-biphenyldicarboxylic acid.

The polyamide resin (B-2) is a wholly aliphatic polyamide resin also known as nylon, in which the main chain comprises an aliphatic skeleton (for example, nylon 6, nylon 11, nylon 12, nylon 66, nylon 610 and the like), a semi-aliphatic polyamide resin or semi-aromatic polyamide resin in which the main chain contains an aromatic ring (for example, nylon 6I, nylon 6T, nylon 9T, nylon M5T, nylon MXD6 and the like), or a wholly aromatic polyamide resin also known as aramid, in which the main chain is constituted only from an aromatic skeleton (Kevlar, Nomex (produced by Du Pont-Toray Co., Ltd.), Twaron and Conex (produced by Teijin Ltd.) and the like).

Any of these can be used in the matrix resin of the FRP material of the metal-FRP composite material of the present invention, but use of a wholly aliphatic polyamide resin or a semi-aliphatic (semi-aromatic) polyamide resin is preferred. A wholly aliphatic polyamide resin is more preferred, and a wholly aliphatic polyamide resin known as nylon 6, which is obtained by ring opening polymerization of $\varepsilon$-caprolactam, is most preferred.

The polyamide resin (B-2) should have a melting point of 180°C to 320°C and a melt viscosity of 10 to 3,000 Pa·s or less at 180°C to 350°C. The melting point is preferably 200°C to 310°C. Wholly aliphatic and semi-aromatic polyamide resins have relatively low melt viscosities and can keep the melt viscosity of the matrix resin at a low value.

Moreover, if the melt viscosity of the polyamide resin (B-2) exceeds 3,000 Pa·s, filling of the matrix resin into the reinforcing fiber substrate is poor and defects such as voids readily occur, meaning that an obtained fiber reinforced plastic molding exhibits poor homogeneity. Meanwhile, if the melt viscosity of the polyamide resin is less than 10 Pa·s, fluidity becomes excessive, it becomes difficult to control the content by volume of fibers in a FRP molded body, chipping occurs as a result of insufficient resin at the time of molding, thickness precision deteriorates, and there can be concerns that the strength of a metal-FRP composite material will decrease.

The Mw value of polyamide resin (B-2) is preferably 10,000 or more, and more preferably 25,000 or more. By using a polyamide resin having a Mw value of 10,000 or more, it is possible to maintain good mechanical strength of a molded body and it is possible to suppress the occurrence of problems such as insufficient resin caused by excessive fluidity and a decrease in thickness precision of a molded body.

The thermoplastic resin composition of the present invention, which contains the phenoxy resin (B-1) and the polyamide resin (B-2), is a solid at normal temperature in a state prior to formation of the matrix resin by heat molding, and has a melt viscosity of 3,000 Pa·s or less within a temperature range of 180°C to 350°C. The melt viscosity of this thermoplastic resin composition is preferably 10 to 2,900 Pa·s, and more preferably 30 to 2,800 Pa·s. If the melt viscosity exceeds 3,000 Pa·s within a temperature range of 180°C to 350°C, the fluidity of the matrix resin composition deteriorates during molding, meaning that solid resin deposited at the surface does not adequately penetrate into the fiber substrate, voids occur and mechanical properties of a molded product deteriorate. In addition, if the melt viscosity is less than 10 Pa·s, the fluidity of the resin becomes excessive, it becomes difficult to control the content by volume of fibers in a FRP molded body, chipping occurs as a result of insufficient resin at the time of molding, thickness precision deteriorates, and mechanical properties of a molded product deteriorate. In addition, these factors can lead to concerns that the mechanical properties of a metal-FRP composite material will deteriorate.

The matrix resin of the metal-FRP composite material of the present invention is a resin composition in which the phenoxy resin (B-1) and the polyamide resin (B-2) are blended at a (B-1)/(B-2) blending ratio of 80/20 to 20/80. The (B-1)/(B-2) mass ratio is preferably 75/25 to 25/75, more preferably 70/30 to 30/70, and most preferably 70/30 to 50/50. If the (B-1)/(B-2) mass ratio exceeds 75/25, the advantageous effects of improving characteristics such as heat resistance and mechanical strength, which are effects achieved by blending the polyamide resin, tend to be insufficient. In addition, if the (B-1)/(B-2) mass ratio is less than 25/75, an improvement in impregnation properties into the reinforcing fiber substrate, which is achieved by blending the phenoxy resin, is not seen, and impregnation into the reinforcing fiber substrate is therefore difficult.

The adhesive strength between the metal member and the thermoplastic resin composition (B) in the present invention is 7.0 MPa or more as a tensile shear strength at 23°C. In the present invention, tensile shear strength means the shear stress measured in accordance with JIS K 6850, and adhesive properties between a metal member and the thermoplastic resin composition are good if the tensile shear strength is 7.0 MPa or more, meaning that strong bonding occurs between the metal and the fiber reinforced plastic when the metal-fiber reinforced plastic composite material is formed, and the composite material can exhibit high mechanical characteristics. However, in cases where the tensile shear strength is less than 7.0 MPa, bonding between a metal and the fiber reinforced plastic is weak, interfacial peeling tends to occur when a load is applied, and mechanical strength decreases. Moreover, the tensile shear strength is preferably 7.5 MPa or more. In addition, in the metal-FRP composite material of the present invention, the thermoplastic resin composition that is the matrix resin of the FRP material must have an interfacial shear strength with the reinforcing fibers (monofilament) of 35 MPa or more and must have a tensile shear strength with a metal member of 7.0 MPa or more.

The phenoxy resin (B-1) that is a resin material which constitutes the thermoplastic resin composition that serves as the matrix resin of the fiber reinforced plastic molding material of the present invention exhibits good affinity with reinforcing fibers (and especially glass fibers and carbon fibers) due to the presence of a hydroxyl group in a side chain of the phenoxy resin. As a result, in a state whereby the thermoplastic resin composition is present in the form of a powder or film at the surface of the reinforcing fiber substrate, the thermoplastic resin composition can penetrate into the inner part of a fiber bundle of the reinforcing fiber substrate extremely easily when pressure is applied. In addition, the phenoxy resin is transparent due to being an amorphous polymer and, when molded, can give a molded body whose surface exhibits high aesthetic properties. Meanwhile, the polyamide resin (B-2) that is a resin material which constitutes the matrix resin is a crystalline polymer but has a high melting point and melt viscosity, and therefore exhibits poor impregnation properties into the reinforcing fiber substrate, but impregnation properties into the substrate can be greatly improved by using the polyamide resin as a powder. In addition, polyamide resins generally exhibit high heat resistance and good mechanical strength such as impact resistance. In cases where the polyamide resin is used as a powder, the average particle diameter (D50) thereof is preferably 10 to 150 μm for example.

The fiber reinforced plastic of the present invention is preferably such that the absolute value of the thickness change rate is less than 2.0% after applying a thermal history of 30 minutes at 180°C. In the present invention, the thickness change rate (%) is a value obtained by dividing the thickness L (mm) of the FRP material at normal temperature after applying a thermal history by the thickness Lo (mm) of the FRP material at normal temperature prior to applying the thermal history, and then multiplying by 100 (L/Lo × 100). If the absolute value of the thickness change rate is less than 2.0%, the FRP material undergoes little irreversible dimensional change as a result of heat, and is unlikely to undergo a decrease in mechanical strength as a result of the thermal history, which is desirable. Meanwhile, if the absolute value of the thickness change rate is 2.0% or more, the FRP material undergoes significant irreversible dimensional change as a result of heat, meaning that a significant decrease in mechanical strength occurs as a result of the thermal history, and applications of the composite material are limited, such as applications in structural members being particularly difficult.

The phenoxy resin (B-1) and the polyamide resin (B-2) are not compatibilized even if finely pulverized, mixed and melted, and do not therefore form a uniform blended product. However, the phenoxy resin is polar due to the presence of hydroxyl groups, and the polyamide resin is polar due to the presence of amide bonds, and it is therefore surmised that a sea-island structure or co-continuous structure is formed in a state having a certain degree of affinity. The structures of these matrix resins can be adjusted as appropriate by altering the blending ratio of the phenoxy resin (B-1) and the polyamide resin (B-2). Therefore, by utilizing good workability and aesthetic properties derived from the phenoxy resin and impact resistance and heat resistance derived from the polyamide resin in the FRP material, it is possible to adjust physical properties of the metal-FRP composite material as appropriate according to required performance.

It is preferable for the FRP material of the metal-FRP composite material of the present invention to contain a flame retardant and an auxiliary flame retardant. The flame retardant is not particularly limited as long as this is a solid at normal temperature and does not exhibit sublimation properties. Examples of these flame retardants include inorganic flame retardants such as calcium hydroxide, organic and inorganic phosphorus-based flame retardants such as ammonium phosphate compounds and phosphoric acid ester compounds, nitrogen-containing flame retardants such as triazine compounds, and bromine-containing flame retardants such as brominated phenoxy resins. Of these, brominated phenoxy resins and phosphorus-containing phenoxy resins can be used as both flame retardants and matrix resins. The blending quantity of the flame retardant (and auxiliary flame retardant) is selected as appropriate depending on the type of flame retardant and the required flame retardancy, but is preferably approximately 0.01 to 50 parts by weight relative to 100 parts by weight of matrix resin so that adhesion properties and impregnation properties of the matrix resin and physical properties of a molded product are not impaired.

Furthermore, thermoplastic resins and thermosetting resins other than the phenoxy resin and the polyamide resin, such as poly (vinylidene chloride) resins, natural rubber, synthetic rubbers and epoxy compounds, can be blended in the FRP material of the present invention as long as good adhesion of the matrix resin to the reinforcing fiber substrate occurs and physical properties of the FRP material are not impaired.

In particular, an epoxy compound can be used in combination with the phenoxy resin (B-1), and this is preferred from the perspective of being able to improve the moldability of the FRP material and impregnation of the matrix resin into the reinforcing fiber substrate, improving affinity between the phenoxy resin and the polyamide resin, and improving adhesive properties between a metal member and the reinforcing fiber substrate.

An epoxy compound is a compound having at least one epoxy group per molecule, is a solid at normal temperature, and has a number average molecular weight of 10,000 or less, preferably 1,000 to 10,000, and more preferably 5,000 to 10,000, and is preferably blended at a proportion of 0.1 to 100 parts by weight relative to 100 parts by weight of the phenoxy resin.

Examples of this type of epoxy compound include bisphenol type epoxy resins, phenol novolac type epoxy resins and triphenyl glycidyl ether type epoxy resins, but of these, solid epoxy resins having a bisphenol A or bisphenol F type skeleton and having a softening point of 80°C or higher are preferably used.

It is possible to blend a variety of inorganic fillers, carbon fillers such as carbon black and carbon nanotubes, body pigments, coloring agents, antioxidants, ultraviolet blocking agents, and the like, in the FRP material of the metal-FRP composite material of the present invention as long as the melt viscosity of the matrix resin composition does not exceed 3,000 Pa·s within a temperature range of 160°C to 250°C, and in cases where an epoxy compound is added, other additives such as curing agents and curing accelerators can also be blended.

The resin composition mentioned above is a mixture containing the phenoxy resin and the polyamide resin, but may, if necessary, contain other resins and additives such as those mentioned above. However, solid components that do not fuse or dissolve together with the resin composition, such as inorganic fillers, are not used as components that constitute the resin composition.

In cases where the resin composition contains components other than the phenoxy resin and the polyamide resin, the proportion of these other components should be 50 mass% or less, and preferably 20 mass% or less. In such a case, The resin composition as a whole should satisfy the melt viscosity mentioned above.

The metal member used in the metal-FRP composite material of the present invention is not particularly limited as long as this metal member can be shaped by means of pressing or the like, but the shape of the metal member is preferably a thin sheet. In addition, examples of the material thereof include iron, titanium, aluminum, magnesium, copper and alloys of these. Here, examples of alloys include iron-based alloys including stainless steel, Ti-based alloys, Al-based alloys, Mg alloys and copper alloys such as brass. The material of the metal member is preferably an iron/steel material, an iron-based alloy, titanium or aluminum, and an iron/steel material in particular is more preferred due to having a higher elastic modulus than other types of metal. Examples of this type of iron/steel material include iron/steel materials specified in Japan Industrial Standards (JIS), examples of which include carbon steels, alloy steels and high tensile steels used in ordinary structures and mechanical structures. Specific examples of this type of iron/steel material include cold rolled steel materials, hot rolled steel materials, hot rolled steel materials for motor vehicle structures and hot rolled high tensile steel materials for automotive machining.

The iron/steel material may be subjected to an arbitrary surface treatment. Here, examples of surface treatments include plating treatments such as zinc plating and aluminum plating, chemical conversion treatments such as chromate treatments and non-chromate treatments, physical treatments such as sand blasting, and chemical surface roughening treatments such as chemical etching, but surface treatments are not limited to these. In addition, a plurality of surface treatments may be carried out. It is preferable to carry out at least a treatment for imparting rust-proofing properties as a surface treatment.

A surface of the metal member may be treated with a primer in order to increase adhesion to the FRP material. Preferred examples of primers used in this treatment include silane coupling agents and triazine thiol derivatives. Examples of silane coupling agents include epoxy-based silane coupling agents, amino-based silane coupling agents and imidazole silane compounds. Examples of triazine thiol derivatives include 6-diallylamino-2,4-dithiol-1,3,5-triazine, monosodium 6-methoxy-2,4-dithiol-1,3,5-triazine, monosodium 6-propyl-2,4-dithiolamino-1,3,5-triazine and 2,4,6-trithiol-1,3,5-triazine.

The metal-FRP composite material of the present invention can be obtained using a method that includes steps (1) to (3) below.

(1) a step for preparing the thermoplastic resin composition (B) ;
(2) a step for causing the thermoplastic resin composition (B) to adhere to the reinforcing fiber substrate (A) so as to produce a prepreg; and
(3) a step for obtaining the metal-fiber reinforced plastic composite material by laminating the metal member and the prepreg and then collectively heat molding using a hot pressing machine or the like.

Moreover, in the process for obtaining the metal-FRP composite material, steps (1) to (3) should be included in this order, and steps other than steps (1) to (3) may be included during, before or after steps (1) to (3). These steps will now be explained in detail.

[Step (1)]

Step (1) is a step for preparing the thermoplastic resin composition (B) in which the phenoxy resin (B-1) and the polyamide resin (B-2) are blended at an arbitrary mass ratio (B-1)/(B-2) within the range 80/20 to 20/80.
The method for blending the phenoxy resin (B-1) and the polyamide resin (B-2) is not particularly limited, and an ordinary well-known method can be used. For example, it is possible to finely pulverize both resins so as to obtain powders, and then mix the powders using a Henschel mixer, a rocking mixer, or the like, so as to obtain a resin composition powder, but it is also possible melt knead both resins using a kneader or the like.
In addition, components other than the phenoxy resin (B-1) and the polyamide resin (B-2), such as the flame retardants and inorganic fillers mentioned above, may be mixed at the same time in this step.

[Step (2)]

Step (2) is a step for producing a prepreg by causing the thermoplastic resin composition (B) that serves as the matrix resin of the FRP material, which was prepared in the former step, to adhere to the reinforcing fiber substrate (A). Moreover, prepreg means a molding material (FRP molding material) for forming the FRP material.
The method for causing the thermoplastic resin composition (B) to adhere to the reinforcing fiber substrate (A) is not particularly limited, and an ordinary well-known method can be used. For example, it is possible to use a method comprising forming a film from the thermoplastic resin composition (B) obtained in step (1), then laminating while heating the reinforcing fiber substrate (A), and then carrying out pressure impregnation, or a method comprising finely powdering the thermoplastic resin composition (B), blowing or depositing the powder on the reinforcing fiber substrate (A), and then welding by heating.
The thermoplastic resin composition (B) is applied so that the amount of the thermoplastic resin composition (B) adhered on the reinforcing fiber substrate (A) (resin content: RC) is 20% to 50%, preferably 25% to 45%, and more preferably 25% to 40%. If the value of RC exceeds 50%, mechanical properties, such as tensile-flexural modulus of elasticity, of the FRP decrease, and if the value of RC is less than 10%, the amount of resin adhered is extremely low, meaning that there is insufficient impregnation of the matrix resin into the inner part of the substrate, which can lead to concerns that thermal properties and mechanical properties will also decrease.
Moreover, the reinforcing fiber substrate (A) being used is preferably subjected to a fiber opening treatment. By carrying out a fiber opening treatment, impregnation of the thermoplastic resin composition into the inner part of the reinforcing fiber substrate is more easily carried out in this step (a step for causing the thermoplastic resin composition (B) to adhere to the reinforcing fiber substrate) and in subsequent molding, and superior physical properties of a molded product can therefore be expected.

[Step (3)]

Step (3) is a step for obtaining the metal-fiber reinforced plastic composite material by laminating the metal member and the prepreg and then collectively heat molding using a hot pressing machine or the like.
The method for laminating the metal member and the FRP molding material is not particularly limited. It is possible to laminate one or more FRP molding materials on at least one surface of the metal member, but it is also possible to laminate the metal member on at least one surface of a FRP molding material or a plurality of laminated FRP molding materials. In addition, a plurality of metal members may be inserted into a multiplicity of laminated FRP molding materials.
If the means for compositing/molding is thermocompression molding, it is possible to appropriately select a variety of molding methods, such as autoclave molding or hot press molding using a die, according to the required size and shape of an FRP molded product.

In addition, by using a die in this case, it is possible to obtain a metal-FRP composite material formed into an arbitrary three-dimensional shape.

The molding temperature is, for example, 180°C to 350°C, preferably 200°C to 340°C, and more preferably 220°C to 340°C. If the molding temperature exceeds the upper limit temperature, heating requires a great deal of time, molding time (tact time) increases, and productivity deteriorates, and this can lead to concerns that the resin will undergo thermal degradation because more heat than necessary is applied. However, if the molding temperature is lower than the lower limit temperature, the melt viscosity of the matrix resin increases, melting of the polyamide resin in particular is insufficient, and impregnation of the matrix resin into the reinforcing fiber substrate therefore deteriorates. The molding time can generally be 30 to 60 minutes.

Moreover, in the metal-fiber reinforced plastic composite material of the present invention, the thickness of the fiber reinforced plastic and that of the metal member are not particularly limited as long as characteristics required for an application in which the composite material is used are satisfied. However, from perspectives such as productivity and cost, the thickness of the fiber reinforced plastic should be approximately 50 to 5,000 pm, and preferably 100 to 2,000 $\mu$m. Similarly, the thickness of the metal member should be, for example, 100 to 5,000 $\mu$m, and preferably 200 to 2,000 $\mu$m.

After compositing/molding the metal-FRP composite material, it is possible to carry out post-processing comprising coating or a hole punching step in order to mechanically join the composite material to another member by means of bolts or rivets.

As described above, the metal member of the present invention is a lightweight, highly strong and highly heat resistant composite material in which the metal member is strongly bonded to an FRP material containing, as a matrix resin, a thermoplastic resin composition (B) in which a phenoxy resin and a polyamide resin are blended at a suitable mass ratio, and can be produced at low cost using a simple method, and can therefore be advantageously used not only in housings for electrical/electronic equipment and the like, but also in structural members in applications such as motor vehicle members and aircraft members.

Working Examples

The present invention will be now be explained in greater detail through the use of working examples, but is not limited to descriptions of these working examples. Moreover, tests and measurement methods for a variety of physical properties in the working examples and comparative examples are as follows.

[Production of FRP molding material (prepreg)]

YP50S (produced by Nippon Steel Chemical & Material Co., Ltd.) as phenoxy resin (B-1) and CM1017 (produced by Toray Industries, Inc., polyamide 6 (PA6)), 1300S (produced by Asahi Kasei Corporation, polyamide 66 (PA66)), 6002 (produced by Mitsubishi Engineering-Plastics Corporation, polyamide MXD6 (PAMXD6)) and N1000A (produced by Kuraray Co., Ltd., polyamide 9T (PA9T)) as polyamide resin (B-2) were freeze-ground and classified to prepare powders having average particle diameters D50 of 60 $\mu$m. These were weighed out at a variety of mass ratios and dry-blended using a Henschel mixer to prepare a thermoplastic resin composition (B).

A plain weave carbon fiber woven fabric produced by fiber opening of T700 (carbon fibers produced by Toray Industries, Inc.) was used as the reinforcing fiber substrate (A), and the thermoplastic resin composition (B) was powder coated on the carbon fiber woven fabric using an electrostatic coating apparatus (produced by Nihon Parkerizing Co., Ltd.). A prepreg was then prepared by heat welding for 1 minute in an oven at 240°C. Moreover, the prepreg was prepared so that the value of RC was 30%.

[Adhesive properties 1: interfacial shear strength with reinforcing fibers]

Adhesive properties of the thermoplastic resin composition (B) to a monofilament of the reinforcing fiber substrate (A) were evaluated by means of interfacial shear strength (MPa) measured using a microdroplet method.

The thermoplastic resin composition (B) used in this test was one obtained by charging the phenoxy resin (B-1) and the polyamide resin (B-2), which had been weighed out at a mass ratio shown for the example in question, in a mixing and extrusion molding machine (a Labo Plastomill 4C150 by Toyo Seiki Co. Ltd.) that had been preheated so that the temperature inside the mixer was 240°C, preheating for 1 minute, melt kneading for 3 minutes, and then gradually cooling.

The method for measuring interfacial shear strength (MPa) will now be explained in detail. A composite material interface characteristics evaluation apparatus (HM410 produced by Toei Sangyo Co., Ltd.) was used for measurements. First, a monofilament was extracted from the reinforcing fiber substrate (A) and set in a sample holder. A measurement sample was obtained by setting the thermoplastic resin composition (B) with the sample holder, melting the thermoplastic resin composition in the apparatus, and causing the resin to adhere to the filament so as to form a drop on the filament. The obtained sample was set in the apparatus, the drop was held between apparatus blades, the filament was moved on the apparatus at a speed of 2 μm/s, and the maximum drawing load F when the drop was extracted from the filament was measured. The interfacial shear strength τ was calculated from the following formula. Moreover, interfacial shear strength values τ were measured for approximately 10 to 20 drops per sample, and the average value thereof was determined.

$$\text{Interfacial shear strength } \tau \text{ (MPa) } = F/\pi dl$$

(F: maximum drawing load, d: filament diameter, 1: drop diameter in drawing direction)

[Heat resistance]

A test piece was obtained by laminating a prescribed number of prepregs, hot pressing for 5 minutes at a temperature of 250°C and a pressure of 3 MPa, and then cooling to 50°C while maintaining the pressurized state. The number of prepregs laminated was adjusted so that the thickness of the test piece was 1.0 mm. The test piece was then cut to a size of 25 mm × 25 mm.

The initial thickness Lo (mm) of the test piece was measured using digital calipers, and the test piece was then subjected to a thermal history for 30 minutes in an oven at 120°C. The thickness L (mm) of the test piece after cooling was measured using digital calipers. The thickness change rate (%) was calculated using the formula below, and a case in which the absolute value thereof was less than 2.0% was assessed as "heat resistance O", a case in which this absolute value was 2.0% to 2.5% was assessed as "heat resistance Δ" and a case in which this absolute value was 3.0% or more was assessed as "heat resistance x".

$$\text{Thickness change rate (\%) } = L/Lo \times 100$$

[Adhesive properties 2: tensile shear strength with metal member]

Adhesive properties between the metal member and the thermoplastic resin composition (B) were evaluated by means of the tensile shear strength (MPa) between the metal member and the thermoplastic resin composition (B).

Tensile shear strength was measured using a test piece produced in accordance with JIS K 6850. The thermoplastic resin composition (B), which was produced by dry blending in advance, was placed within a region measuring 25 mm × 12.5 mm at the distal end of a metal piece (measuring 25 mm × 100 mm and having a thickness of 1.6 mm), a metal piece having the same size as the aforementioned metal piece was overlaid thereon, and a test piece was prepared by hot pressing for 10 minutes at a temperature of 240°C and a pressure of 3 MPa. An AGS-X produced by Shimadzu Corporation was used for loading.

[Flexural test]

Physical properties (flexural strength and flexural modulus of elasticity) of an obtained metal-FRP composite material were measured in accordance with JIS K 7074.

First, two sets of a required number of prepregs were prepared so that the thickness after molding was approximately 0.4 mm. Next, one prepared set of prepregs was laminated, a metal sheet having a thickness of 0.4 mm was laminated on the prepregs, one set of prepared prepregs was laminated on the metal sheet, the obtained laminated body was hot pressed for 5 minutes at a temperature of 250°C and a pressure of 3 MPa, and a composite material was then formed by cooling to 50°C while maintaining the pressurized state (the overall thickness was 1.2 mm). A flexural test sample was then prepared by cutting this composite material to a size of 10 mm × 80 mm. An AGS-X produced by Shimadzu Corporation was used for loading.

Following completion of the loading test, the test piece was then assessed as × for a case in which interfacial peeling occurred between the metal sheet and the FRP material and as O for a case where peeling did not occur.

Working Examples 1 to 13 and Comparative Examples 1 to 6

The tests were carried out at the resin ratios shown in Table 1 and Table 2. The metal member used in the adhesive properties 2 test and the flexural test was a SGCC steel (purchased from Standard Test Piece). The thickness of the metal member used in the flexural test was 0.4 mm.

[Table 1]

| Example | | 1 | 2 | 3 | 4 | Compara tive 1 | Compara tive 2 | Compara tive 3 |
|---|---|---|---|---|---|---|---|---|
| Resin Mass ratio τ | YP50S | 70 | 50 | 30 | 80 | 100 | 10 | 0 |
| | PA6 | 30 | 50 | 70 | 20 | 0 | 90 | 100 |
| | | 55 | 53 | 47 | 56 | 58 | 41 | 37 |
| Heat resistance | | ○ | ○ | ○ | × | × | × | × |
| Shear strength | (MPa) | 19.5 | 13.7 | 12.4 | 18.2 | 21.3 | 13.9 | 12.2 |
| Flexural strength | (MPa) | 1,056 | 1,061 | 966 | 918 | 757 | 580 | 662 |
| Flexural modulus of elasticity | (GPa) | 81 | 79 | 82 | 71 | 66 | 93 | 80 |
| Peeling | | ○ | ○ | ○ | ○ | ○ | ○ | × |

[Table 2]

| Example | | 5 | 6 | 7 | 8 | 9 | 10 | 11 | 12 | 13 | Compara 4 | Compara 5 | Compara 6 |
|---|---|---|---|---|---|---|---|---|---|---|---|---|---|
| Resin (Mass ratio) | YP50S | 70 | 50 | 30 | 70 | 50 | 30 | 70 | 50 | 30 | 0 | 0 | 0 |
| | PA66 | 30 | 50 | 70 | | | | | | | 100 | | |
| | PAMXD6 | | | | 30 | 50 | 70 | | | | | 100 | |
| | PA9T | | | | | | | 30 | 50 | 70 | | | 100 |
| $\tau$ | (MPa) | 55 | 53 | 45 | 55 | 50 | 40 | 52 | 51 | 44 | 38 | 30 | 35 |
| Heatresist ance | | ○ | ○ | ○ | ○ | ○ | ○ | ○ | ○ | ○ | Δ | ND | O |
| Shear strength | (MPa) | 19.3 | 13.5 | 12.1 | 18.6 | 14.3 | 12.7 | 18.8 | 14.2 | 14.1 | 12.1 | 17.8 | 19.4 |
| Flexural strength | (MPa) | 1,052 | 1,029 | 948 | 613 | 507 | 430 | 931 | 918 | 761 | 661 | ND | 659 |
| Flexural modulus of elasticity | (GPa) | 81 | 82 | 76 | 74 | 71 | 62 | 79 | 77 | 75 | 79 | ND | 77 |
| Peeling | | ○ | ○ | ○ | ○ | ○ | ○ | ○ | ○ | ○ | × | × | × |

In view of the working examples and comparative examples above, it is understood that the metal-fiber reinforced plastic composite material disclosed in the present invention exhibits good adhesive properties to an iron/steel material and exhibits good mechanical characteristics as a composite material.

Comparative Examples 7 to 12

The tests were carried out at the resin ratios shown in Table 3. The reinforcing fiber substrate (A) used was an SA-3203 fiber-opened carbon fiber woven fabric produced by Sakai Ovex Co., Ltd., and the metal member used in the adhesive properties 2 test and the flexural test was SGCC (purchased from Standard Test Piece). The thickness of the metal member used in the flexural test was 0.4 mm.

[Table 3]

| Comparative Example | | Compara 7 | Compara 8 | Compara 9 | Compara 10 | Compara 11 | Compara 12 |
|---|---|---|---|---|---|---|---|
| | YP50S | 70 | 50 | 0 | 70 | 70 | 70 |
| Resin (Mass ratio) | PA6 | 30 | 50 | 100 | | | |
| | PA66 | | | | 30 | | |
| | PAMXD6 | | | | | 30 | |
| | PA9T | 30 | 50 | 100 | | | 30 |
| $\tau$ | (MPa) | 34 | 33 | 30 | 33 | 28 | 30 |
| Heat resistance | | ○ | ND | ND | ○ | ND | ND |
| Shear strength | (MPa) | 12.7 | 13.7 | 12.2 | 12.1 | 10.9 | 11.5 |
| Flexural strength | (MPa) | 420 | ND | ND | 431 | ND | ND |
| Flexural modulus of elasticity | (GPa) | 70 | ND | ND | 70 | ND | ND |
| Peeling | | ○ | ND | ND | ○ | ND | ND |

Because the adhesive strength $\tau$ between the thermoplastic resin composition (B) and a monofilament of the reinforcing fiber substrate (A) was low, physical properties were poor, or the resin flowed out from the substrate when the prepreg was hot pressed, meaning that a test piece could not be produced (ND).

Working Examples 14 to 25 and Comparative Examples 13 to 17

The tests were carried out at the resin ratios shown in Table 4 and Table 5. The metal member used in the adhesive properties 2 test and the flexural test was an A1050 aluminum (purchased from Standard Test Piece). The thickness of the metal member used in the flexural test was 0.5 mm.

[Table 4]

| Example | | 14 | 15 | 16 | Compara 13 | Compara 14 |
|---|---|---|---|---|---|---|
| Resin | YP50S | 70 | 50 | 30 | 100 | 0 |
| (Mass ratio) | PA6 | 30 | 50 | 70 | 0 | 100 |
| $\tau$ | (MPa) | 55 | 53 | 44 | 58 | 37 |
| Heat resistance | | ○ | ○ | ○ | × | × |
| Shear strength | (MPa) | 11.9 | 9.1 | 7.7 | 11.6 | 6.2 |
| Flexural strength | (MPa) | 995 | 977 | 940 | 705 | 736 |
| Flexural modulus of elasticity | (GPa) | 72 | 71 | 75 | 58 | 78 |
| Peeling | | ○ | ○ | ○ | ○ | × |

[Table 5]

| Example | | 17 | 18 | 19 | 20 | 21 | 22 | 23 | 24 | 25 | Compara 15 | Compara 16 | Compara 17 |
|---|---|---|---|---|---|---|---|---|---|---|---|---|---|
| Resin (Mass ratio) | YP50S | 70 | 50 | 30 | 70 | 50 | 30 | 70 | 50 | 30 | 0 | 0 | 0 |
| | PA66 | 30 | 50 | 70 | | | | | | | 100 | | |
| | PAMXD | | | | 30 | 50 | 70 | | | | | 100 | |
| | PA9T | | | | | | | 30 | 50 | 70 | | | 100 |
| τ | (MPa) | 55 | 53 | 45 | 55 | 50 | 40 | 52 | 51 | 44 | 38 | 30 | 35 |
| Heat resistance | | ○ | ○ | ○ | ○ | ○ | ○ | ○ | ○ | ○ | Δ | ND | O |
| Shear strength | (MPa) | 11.9 | 8.7 | 7.5 | 12 | 9.2 | 7.7 | 11.7 | 9 | 7.8 | 6.1 | 5.8 | 6.1 |
| Flexural strength | (MPa) | 991 | 955 | 922 | 591 | 484 | 404 | 872 | 731 | 636 | 733 | ND | 551 |
| Flexural modulus of elasticity | (GPa) | 72 | 72 | 71 | 64 | 57 | 55 | 70 | 68 | 68 | 78 | ND | 65 |
| Peeling | | ○ | ○ | ○ | ○ | ○ | ○ | ○ | ○ | ○ | × | × | × |

In view of the working examples and comparative examples above, it is understood that the metal-fiber reinforced plastic composite material of the present invention exhibits good adhesive properties to a non-ferrous metal and also exhibits good mechanical characteristics as a composite material.

[Industrial Applicability]

The metal-fiber reinforced plastic composite material of the present invention can be used as a fiber reinforced plastic (FRP) material in a wide variety of fields, such as housings for electronic devices such as laptop computers and tablets, arms for industrial robots, reinforcing materials for building structures, and sports and leisure goods.

**Claims**

1. A metal-fiber reinforced plastic composite material which is a laminate of a metal member and a fiber reinforced plastic, wherein

   the fiber reinforced plastic comprises a reinforcing fiber substrate (A) and a thermoplastic resin composition (B), the thermoplastic resin composition (B) contains a phenoxy resin (B-1) and a polyamide resin (B-2) at a mass ratio (B-1)/(B-2) of 80/20 to 20/80,
   an adhesive strength of the thermoplastic resin composition (B) to a monofilament of the reinforcing fiber substrate (A) is 40 MPa or more as an interfacial shear strength at 23°C in a microdroplet method, and
   an adhesive strength between the metal member and the thermoplastic resin composition (B) is 7.0 MPa or more as a tensile shear strength at 23°C.

2. The metal-fiber reinforced plastic composite material according to claim 1, wherein after applying a thermal history of 30 minutes at 180°C, an absolute value of a thickness change rate of the fiber reinforced plastic at normal temperature is less than 2.0%.

3. The metal-fiber reinforced plastic composite material according to claim 1 or claim 2, wherein the polyamide resin (B-2) is a wholly aliphatic polyamide and/or a semi-aliphatic polyamide.

4. The metal-fiber reinforced plastic composite material according to any one of claims 1 to 3, wherein the material of the metal member is an iron/steel material or aluminum.

5. The metal-fiber reinforced plastic composite material according to any one of claims 1 to 4, wherein the reinforcing fiber substrate includes one or two or more types of fiber selected from the group consisting of carbon fibers, boron fibers, silicon carbide fibers, glass fibers and aramid fibers.

**EP 3 904 074 A1**

| | INTERNATIONAL SEARCH REPORT | International application No. |
|---|---|---|
| | | PCT/JP2019/050298 |

**A. CLASSIFICATION OF SUBJECT MATTER**
Int.Cl. B32B15/08(2006.01)i, B29C70/68(2006.01)i, B32B15/088(2006.01)i,
C08J5/04(2006.01)i, B29K105/22(2006.01)n
FI: B32B15/08105Z, B32B15/088, C08J5/04CFG, B29C70/68, B29K105:22
According to International Patent Classification (IPC) or to both national classification and IPC

**B. FIELDS SEARCHED**

Minimum documentation searched (classification system followed by classification symbols)
Int.Cl. B32B1/00-43/00, B29C70/00-70/88, B29B11/16, B29B15/08-15/14,
C08J5/04-5/10, C08J5/24

Documentation searched other than minimum documentation to the extent that such documents are included in the fields searched
　　Published examined utility model applications of Japan　　1922-1996
　　Published unexamined utility model applications of Japan　　1971-2020
　　Registered utility model specifications of Japan　　1996-2020
　　Published registered utility model applications of Japan　　1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-39247 A (TAISEI PLAS CO., LTD.) 15.03.2018 (2018-03-15), claims 1, 3 | 1-5 |
| A | JP 2010-260974 A (HITACHI CHEMICAL CO., LTD.) 18.11.2010 (2010-11-18), claims 1, 5, 7 | 1-5 |
| A | WO 2012/002434 A1 (SUMITOMO BAKELITE CO., LTD.) 05.01.2012 (2012-01-05), claim 1 | 1-5 |
| A | JP 4-11654 A (TOYODA GOSEI CO., LTD.) 16.01.1992 (1992-01-16), claim 1 | 1-5 |
| P, A | JP 2019-150990 A (NIPPON STEEL CORP.) 12.09.2019 (2019-09-12), claims 1, 3, 10 | 1-5 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.03.2020 | 17.03.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

# EP 3 904 074 A1

| | | | |
|---|---|---|---|
| INTERNATIONAL SEARCH REPORT | | International application No. | |
| Information on patent family members | | PCT/JP2019/050298 | |

```
JP 2018-39247 A    15.03.2018    (Family: none)

JP 2010-260974 A   18.11.2010    (Family: none)

WO 2012/002434 A1  05.01.2012    US 2013/0105200 A1
                                 claim 1
                                 CN 102958984 A
                                 KR 10-2013-0089235 A
                                 TW 201220977 A

JP 4-11654 A        16.01.1992    (Family: none)

JP 2019-150990 A    12.09.2019    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014509971 A
- JP 2016060051 A
- JP 2015129271 A
- JP H0411654 B

**Non-patent literature cited in the description**

- *Reinforced Plastics,* 2013, vol. 59, 330